# EUROPEAN PATENT SPECIFICATION

(11) **EP 2 922 148 B1**
(45) Date of publication and mention of the grant of the patent: **07.08.2019**
(21) Application number: 14811233.7
(22) Date of filing: 09.06.2014
(51) Int. Cl.: G06K 19/077, G06K 19/07, H01R 12/70, H04B 1/3816, H04B 7/24, G06K 7/00

(54) **USB CONNECTOR AND WIRELESS INTERNET DEVICE**
USB-ANSCHLUSS UND DRAHTLOSE INTERNETVORRICHTUNG
CONNECTEUR USB ET DISPOSITIF INTERNET SANS FIL

(30) Priority: 09.06.2013 CN 201310231241
(43) Date of publication of application: 23.09.2015
(73) Proprietor: Huawei Device Co., Ltd., Dongguan, Guangdong 523808 (CN)
(72) Inventor: QIAN, Zexu, Shenzhen Guangdong 518129 (CN)
(74) Representative: Thun, Clemens
(86) International application number: PCT/CN2014/079442
(87) International publication number: WO 2014/198203

(56) References cited:
- EP-A1- 2 571 103
- CN-U- 201 623 279
- CN-U- 201 860 011
- CN-U- 202 004 207
- CN-Y- 201 242 754
- US-A1- 2010 155 489
- US-B1- 8 167 658

## Description

### TECHNICAL FIELD

The present invention relates to the field of communications, and in particular, to a USB connector and a wireless network access device.

### BACKGROUND

At present, USB (universal serial bus, universal serial bus) interfaces have become common standard configuration for personal computers (desktop computers and portable computers), and are also the most common interfaces for connection to external devices. Wireless network access devices such as wireless WAN cards have been widely applied to personal computers, especially to connections between portable personal computers and wireless networks. A wireless WAN card contains a subscriber card such as a SIM card or a USIM card, and accesses a 2G/3G/4G network in a wireless manner. A computer may be connected to the wireless WAN card by means of a USB or the like, to access the Internet, and implement Internet surfing functions such as web page browsing, and sending and receiving of E-mails on the computer, thereby meeting a mobile office requirement of a subscriber. Because a subscriber card holder and a subscriber card of a wireless WAN card need to be disposed on a circuit board in the wireless WAN card, some space is occupied, and it is not beneficial to miniaturization of the wireless WAN card.

For example, US 2010/0155489A1 refers to a connector for inserting a subscriber identity module card. Further, US 8, 167, 658 B1 refers to a combined structure of a USB plug with a built in reading slot. Further, EP 2 571 103 A1 refers to a connector and wireless modem.

### SUMMARY

A USB connector and a wireless network access device are provided to reduce a size of the wireless network access device, to achieve an objective of miniaturizing the wireless network access device.

According to a first aspect, a USB connector is provided, and is configured to connect to a first circuit board of a body portion of an electronic device, to transmit signals to the first circuit board, where the USB connector includes a substrate, a USB signal pin, a subscriber card mounting portion, and a subscriber card data signal pin; the USB signal pin is disposed on a top of the substrate, and the USB signal pin is electronically connected to the first circuit board, to transmit USB signals; the subscriber card mounting portion is disposed on a bottom of the substrate, to mount a subscriber card; and the subscriber card data signal pin is disposed in the subscriber card mounting portion, and the subscriber card data signal pin is electronically connected to the first circuit board, so that when the subscriber card is mounted in the mounting portion, subscriber card data signal transmission between the subscriber card and the first circuit board is implemented by using the subscriber card data signal pin, wherein the subscriber card mounting portion is a groove, wherein the groove is formed concave inwardly from the bottom of the substrate and is configured so that when the subscriber card is mounted in the groove, a data signal pin of the subscriber card is electronically connected to the subscriber card data signal pin in the groove.

With reference to the first aspect, in a first possible implementation manner, the subscriber card data signal pin is a conductive spring, and when the subscriber card is mounted in the groove, the conductive spring presses against the data signal pin of the subscriber card, to electronically connect to the subscriber card.

With reference to the first aspect or any one of the first to second possible implementation manners of the first aspect, in a third possible implementation manner, the USB connector further includes a first casing, and the first casing covers the bottom and two sides of the substrate, to assist in positioning of the subscriber card when the subscriber card is mounted in the subscriber card mounting portion.

With reference to the third possible implementation manner of the first aspect, in a fourth possible implementation manner, the first casing is provided with a gap; when the subscriber card is mounted in the subscriber card mounting portion, a part of the subscriber card corresponds to the gap; and the subscriber card is pulled out from the subscriber card mounting portion by pulling the part of the subscriber card that corresponds to the gap.

With reference to the third or fourth possible implementation manner of the first aspect, in a fifth possible implementation manner, the first casing is further provided with a drive port; when the subscriber card is mounted in the subscriber card mounting portion, a part of the subscriber card corresponds to the drive port; and the drive port drives the part of the subscriber card that corresponds to the drive port, to disengage the subscriber card from the subscriber card mounting portion.

With reference to the first aspect or any one of the first to fifth possible implementation manners of the first aspect, in an sixth possible implementation manner, the USB connector further includes a second casing, and the second casing covers the top of the substrate, to form an accommodating area enclosed by the top of the substrate and the second casing.

With reference to the first aspect or any one of the first to sixth possible implementation manners of the first aspect, in a seventh possible implementation manner, the USB signal pin extends out of a joint of the USB connector to form a USB signal welding pin, to connect to the first circuit board; the subscriber card data signal pin extends out of the joint of the USB connector to form a subscriber card data signal welding pin, to connect to the first circuit board; and the USB signal welding pin and the subscriber card data signal welding pin are located in a same horizontal plane or located in two rows.

According to a second aspect, a wireless network access device is provided, where the device includes a body portion and the USB connector according to the foregoing first aspect and all the possible implementation manners, where the USB connector is disposed at an end of the body portion.

The wireless network access device is provided according to the various implementation manners, where the wireless network access device includes the USB connector and the body portion. The USB connector includes a substrate, a USB signal pin, a subscriber card mounting portion, and a subscriber card data signal pin, where the USB signal pin is disposed on a top of the substrate, and the USB signal pin is electronically connected to the first circuit board, to transmit USB signals; the subscriber card mounting portion is disposed on a bottom of the substrate, to mount a subscriber card; and the subscriber card data signal pin is disposed in the subscriber card mounting portion, and the subscriber card data signal pin is electronically connected to the first circuit board, so that when the subscriber card is mounted in the mounting portion, subscriber card data signal transmission between the subscriber card and the first circuit board is implemented by using the subscriber card data signal pin. Therefore, the subscriber card is mounted in the USB connector rather than in the body portion, so that space of the body portion is saved, thereby reducing a size of the wireless network access device, implementing an objective of miniaturizing the wireless network access device, and reducing impact on the subscriber card caused by heat generated in the wireless network access.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a state before a wireless network access device is connected to a communications terminal;
FIG. 2 is a schematic diagram of a wireless network access device in which a subscriber card is mounted;
FIG. 3 is a schematic diagram of a longitudinal section of a wireless network access device;
FIG. 4 is a block diagram when a USB connector is connected to a first circuit board;
FIG. 5 is a schematic diagram of a longitudinal section of a USB connector;
FIG. 6 is a schematic diagram of a longitudinal section of a USB connector of a wireless network access device;
FIG. 7 is a schematic diagram of a longitudinal section of a USB connector in which a subscriber card is mounted;
FIG. 8 is a schematic top view of a USB connector;
FIG. 9 is a first schematic cross-sectional diagram of a USB connector; and
FIG. 10 is a second schematic cross-sectional diagram of a USB connector.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

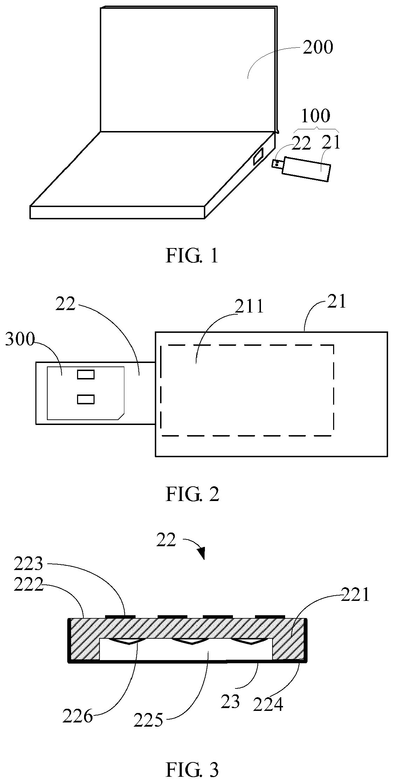

Referring to FIG. 1 and FIG. 2, a first embodiment of the present invention provides a wireless network access device 100. The wireless network access device 100 is configured to connect to a communications terminal 200, to communicate with the communications terminal 200. It should be noted that the present invention is applicable to any electronic device in which a USB connector is mounted and which is capable of reading a subscriber card. The present invention uses a particular electronic device, namely a wireless network access device, for description, but this does not constitute any limitation on application of the present invention to electronic devices except wireless network access devices.

The wireless network access device 100 includes a body portion 21 and a USB (universal serial bus, universal serial bus) connector 22. A first circuit board 211 is disposed in the body portion 21. The USB connector 22 is configured to connect to the first circuit board 211 of the body portion 21 of the wireless network access device 100. The USB connector 22 is disposed at an end of the body portion 21. The USB connector 22 is connected to the first circuit board 211, to transmit signals to the first circuit board 211. In another embodiment, the USB connector 22 may further be configured to connect to a first circuit board of a body portion of another electronic device, to transmit signals to the first circuit board.

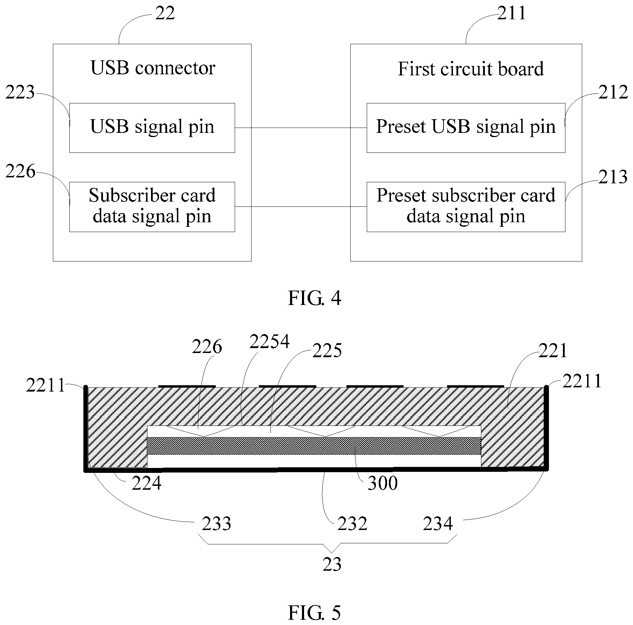

Referring to FIG. 3 and FIG. 4, the USB connector 22 includes a substrate 221, a USB signal pin 223, a subscriber card mounting portion 225, and a subscriber card data signal pin 226. The USB signal pin 223 is disposed on a top 222 of the substrate 221. The USB signal pin 223 is electronically connected to the first circuit board 211, to transmit USB signals. The subscriber card mounting portion 225 is disposed on a bottom 224 of the substrate 221, to mount a subscriber card 300. The top and the bottom are disposed opposite to each other. The subscriber card data signal pin 226 is disposed in the subscriber card mounting portion 225. The subscriber card data signal pin 226 is electronically connected to the first circuit board 211, so that when the subscriber card 300 is mounted in the subscriber card mounting portion 225, subscriber card data signal transmission between the subscriber card 300 and the first circuit board 211 is implemented by using the subscriber card data signal pin 226. In this embodiment, the substrate 221 is a plastic body. Optionally, the substrate 221 may also be a circuit board extending from the first circuit board 211.

The first circuit board 211 is provided with a preset USB signal pin 212 and a preset subscriber card data signal pin 213. The USB signal pin 223 of the USB connector 22 is connected to the preset USB signal pin 212, to transmit USB signals. The subscriber card data signal pin 226 of the USB connector 22 is connected to the preset subscriber card data signal pin 213, to transmit subscriber card data signals. In this embodiment of the present invention, the USB signal pin 223 and the subscriber card data signal pin 226 may be connected to an electronic element on the first circuit board 211 by using an exposed signal line of the first circuit board 211, may be connected to an electronic element on the first circuit board 211 by using an internal line of the first circuit board 211, or may be connected to an electronic element on the first circuit board 211 directly, which is not limited in the present invention.

Referring to FIG. 5, optionally, the subscriber card mounting portion 225 is a groove. The groove is formed concave inwardly from the bottom 224 of the substrate 221. When the subscriber card 300 is mounted in the groove, a data signal pin of the subscriber card 300 is electronically connected to the subscriber card data signal pin 226 in the groove.

Specifically, an angle between a first side wall of the groove and a bottom wall 2254 of the groove is an obtuse angle, to guide the subscriber card 300 to enter or exit from the groove. The first side wall corresponds to a gap 234.

In this embodiment , the subscriber card data signal pin 226 is a conductive spring. When the subscriber card 300 is mounted in the subscriber card mounting portion 225, the conductive spring presses against the data signal pin of the subscriber card 300, to electronically connect to the subscriber card 300. The conductive spring is a hemispherical spring. In another embodiment, the subscriber card data signal pin 226 may be a conductive spring of another shape (such as a bent conductive spring).

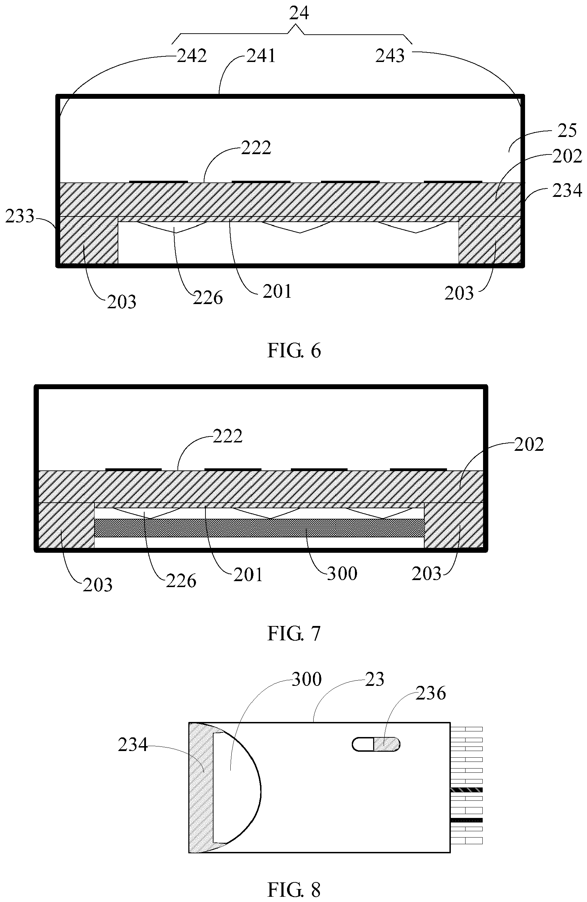

Referring to FIG. 6 and FIG. 7, a second embodiment of the present invention provides a wireless network access device. The wireless network access device provided by the second embodiment is similar to the wireless network access device 100 provided by the first embodiment, and a difference between the two devices lies in that: in the second embodiment, the mounting portion is a subscriber card holder 201. The subscriber card holder 201 is electronically connected to the first circuit board 211 by using the substrate 221, so that the subscriber card 300 transmits subscriber card data to the first circuit board 211 by using the subscriber card holder 201 and the substrate 221.

Specifically, the substrate 221 is a second circuit board extending from the first circuit board 211. The subscriber card holder 201 is fastened to a bottom of the second circuit board and is electronically connected to the second circuit board. Positioning blocks 203 are disposed on two sides of the subscriber card holder 201 on the bottom of the second circuit board, to position the subscriber card holder 201.

The subscriber card data signal pin 226 is disposed on the subscriber card holder 201, to correspond to a corresponding data signal pin on the subscriber card 300. When the subscriber card 300 is mounted on the subscriber card holder 201, the subscriber card data signal pin 226 is connected to the corresponding data signal pin on the subscriber card 300, so that the subscriber card 300 transmits subscriber card data signals to the first circuit board 211 by using the second circuit board.

Optionally, in the foregoing embodiments of the present invention, the USB connector 22 further includes a first casing 23. The first casing 23 covers the bottom 224 and two sides 2211 of the substrate 221, to assist in positioning of the subscriber card 300 when the subscriber card 300 is mounted in the subscriber card mounting portion 225. The subscriber card data signal pin 226 is disposed on the bottom wall 2254 of the groove 225. When the subscriber card 300 is mounted in the groove 225, the subscriber card data signal pin 226 is electronically connected to a corresponding pin of the subscriber card 300, so that the subscriber card 300 transmits subscriber card data signals to the first circuit board 211.

Specifically, the first casing 23 includes a positioning portion 232, and a first connecting portion 233 and a second connecting portion 234 that are formed by bending and extending two sides of the positioning portion 232 upward. The first connecting portion 233 and the second connecting portion 234 are fastened to the two sides 2211 of the substrate 221.

Referring to FIG. 8, optionally, a first end of the positioning portion 232 is provided with the gap 234. When the subscriber card 300 is mounted in the subscriber card mounting portion 225, a part of the subscriber card 300 corresponds to the gap 234. The subscriber card 300 is pulled out from the subscriber card mounting portion 225 by pulling the part of the subscriber card 300 that corresponds to the gap 234.

Optionally, the positioning portion 232 of the first casing 23 is further provided with a drive port 236. When the subscriber card 300 is mounted in the subscriber card mounting portion 225, a part of the subscriber card 300 corresponds to the drive port 236. The drive port 236 drives the part of the subscriber card 300 that corresponds to the drive port 236, to disengage the subscriber card 300 from the subscriber card mounting portion 225.

The USB connector 22 may further include a second casing 24. The second casing 24 covers the top 222 of the substrate 221, to form an accommodating area 25 enclosed by the top 222 of the substrate 221 and the second casing 24, to accomodate and connect to a connecting portion of another USB connector, thereby transmitting USB signals. The second casing 24 includes a limiting portion 241, and a third connecting portion 242 and a fourth connecting portion 243 that are formed by bending and extending two ends of the limiting portion 241. An end of the third connecting portion 242 is disposed on an end of the first connecting portion 233. An end of the fourth connecting portion 243 is disposed on an end of the second connecting portion 234.

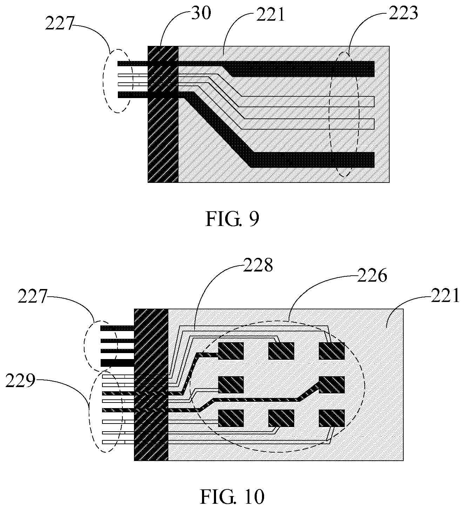

Referring to FIG. 9 and FIG. 10, optionally, the USB signal pin 223 is bent and extends out of a joint 30 of the USB connector 22, to form a USB signal welding pin 227, to connect to the first circuit board 211. The subscriber card data signal pin 226 extends out of the joint of the USB connector to form a subscriber card data signal welding pin 229, to connect to the first circuit board 211. The USB signal welding pin 227 and the subscriber card data signal welding pin 229 may be located in a same horizontal plane, to reduce a thickness of the USB connector 22. The USB signal welding pin 227 and the subscriber card data signal welding pin 229 may not be located in a same horizontal plane. For example, the USB signal welding pin 227 and the subscriber card data signal welding pin 229 may be located in two rows, thereby reducing a width of the USB connector 22. That is, a manner of disposing the USB signal welding pin 227 and the subscriber card data signal welding pin 229 may be adjusted according to an actual requirement.

In another embodiment, the USB connector 22 may further include a connecting line 228. The subscriber card data signal pin 226 is connected to a first end of the connecting line 228. A second end of the connecting line 228 extends out of the joint 30 of the USB connector 22 to form the subscriber card data signal welding pin 229, to connect to the first circuit board 211.

In this embodiment of the present invention, optionally, the wireless network access device 100 is a wireless WAN card. The subscriber card 300 is a NANO SIM card. A length of the NANO SIM card is 12.3 mm ± 0.1 mm. A width of the NANO SIM card is 8.8 mm ± 0.1 mm. A thickness of the NANO SIM card is about 0.65 mm. A length of the USB connector 22 is 14 mm. The width of the USB connector 22 is 12 mm. The thickness of the USB connector 22 is 4.5 mm.

In the foregoing embodiment, the USB connector 22 of the wireless network access device 100 includes a substrate 221, a USB signal pin 223, a subscriber card mounting portion 225, and a subscriber card data signal pin 226. The USB signal pin 223 is disposed on a top 222 of the substrate 221. The USB signal pin 223 is electronically connected to the first circuit board 211, to transmit USB signals. The subscriber card mounting portion 225 is disposed on a bottom 224 of the substrate 221, to mount a subscriber card 300. The subscriber data signal pin 226 is disposed on the subscriber card mounting portion 225. The subscriber card data signal pin 226 is electronically connected to the first circuit board 211, so that when the subscriber card 300 is mounted in the subscriber card mounting portion 225, subscriber card data signal transmission between the subscriber card 300 and the first circuit board 211 is implemented by using the subscriber card data signal pin 226. Therefore, the subscriber card 300 is mounted in the USB connector 22 rather than in the body portion 21, so that space of the body portion 21 is saved, thereby reducing a size of the wireless network access device 100, implementing an objective of miniaturizing the wireless network access device 100, and reducing impact on the subscriber card 300 caused by heat generated in the wireless network access 100.

What is disclosed above is merely exemplary embodiments of the present invention, and certainly is not intended to limit the protection scope of the present invention.

## Claims

1. A USB connector (22), configured to connect to a first circuit board (211) of a body portion (21) of an electronic device to transmit signals to the first circuit board (211), wherein the USB connector (22) comprises a substrate (221), a USB signal pin (223), a subscriber card mounting portion (225), and a subscriber card data signal pin (226); the USB signal pin (223) is disposed on a top of the substrate, and the USB signal pin (223) is electronically connectable to the first circuit board (211), to transmit USB signals; the subscriber card mounting portion (225) is disposed on a bottom of the substrate (221), to mount a subscriber card (300); the subscriber card data signal pin (226) is disposed in the subscriber card mounting portion (225), and the subscriber card data signal pin (226) is electronically connectable to the first circuit board (211), so that when the subscriber card (300) is mounted in the mounting portion (225), subscriber card data signal transmission between the subscriber card (300) and the first circuit board (211) is implemented by using the subscriber card data signal pin (226), **characterized in that**
the subscriber card mounting portion (225) is a groove (225), wherein the groove (225) is formed concave inwardly from the bottom of the substrate (221) and is configured so that when the subscriber card (300) is mounted in the groove (225), a data signal pin of the subscriber card (300) is electronically connected to the subscriber card data signal pin (226) in the groove (225).

2. The USB connector (22) according to claim 1, wherein the subscriber card data signal pin (226) is a conductive spring, and when the subscriber card (300) is mounted in the groove, the conductive spring presses against the data signal pin of the subscriber card (300), to electronically connect to the subscriber card (300).

3. The USB connector (22) according to any one of claims 1 to 2, wherein the USB connector (22) further comprises a first casing (23), and the first casing (23) covers the bottom and two sides of the substrate, to assist in positioning of the subscriber card (300) when the subscriber card (300) is mounted in the subscriber card mounting portion (225).

4. The USB connector (22) according to claim 3, wherein the first casing (23) is provided with a gap (234); when the subscriber card (300) is mounted in the subscriber card mounting portion (225), a part of the subscriber card (300) corresponds to the gap (234); and the subscriber card (300) is pulled out from the subscriber card mounting portion (225) by pulling the part of the subscriber card (300) that corresponds to the gap (234).

5. The USB connector (22) according to claim 3 or 4, wherein the first casing (23) is further provided with a drive port (236); when the subscriber card (300) is mounted in the subscriber card mounting portion (225), a part of the subscriber card (300) corresponds to the drive port (236); and the drive port (236) drives the part of the subscriber card (300) that corresponds to the drive port (236), to disengage the subscriber card (300) from the subscriber card mounting portion (225).

6. The USB connector (22) according to any one of claims 1 to 5, wherein the USB connector (22) further comprises a second casing (24), and the second casing (24) covers the top of the substrate (221), to form an accommodating area enclosed by the top of the substrate (221) and the second casing (24).

7. The USB connector (22) according to any one of claims 1 to 6, wherein the USB signal pin (223) extends out of a joint of the USB connector (22) to form a USB signal welding pin, to connect to the first circuit board (221); the subscriber card data signal pin (226) extends out of the joint of the USB connector (22) to form a subscriber card data signal welding pin, to connect to the first circuit board 8221); and the USB signal welding pin and the subscriber card data signal welding pin are located in a same horizontal plane or located in two rows.

8. A wireless network access device, comprising a body portion (21) and a USB connector (12) according to any one of claims 1 to 7, wherein the USB connector (12) is disposed at an end of the body portion (21).

## Patentansprüche

1. USB-Anschluss (22), der konfiguriert ist, um eine erste Leiterplatte (211) eines Körperabschnitts (21) einer elektronischen Vorrichtung anzuschließen, um Signale zur ersten Leiterplatte (211) zu übertragen, wobei der USB-Anschluss (22) ein Substrat (221), einen USB-Signalstift (223), einen Montageabschnitt der Abonnentenkarte (225) und einen Datensignalstift der Abonnentenkarte (226) umfasst; der USB-Signalstift (223) ist auf einer Oberseite des Substrats angeordnet und der USB-Signalstift (223) ist elektronisch an der ersten Leiterplatte (211) anschließbar, um USB-Signale zu übertragen; der Montageabschnitt der Abonnentenkarte (225) ist auf einem Boden des Substrats (221) angeordnet, um eine Abonnentenkarte (300) zu montieren; der Datensignalstift der Abonnentenkarte (226) ist im Montageabschnitt der Abonnentenkarte (225) angeordnet und der Datensignalstift der Abonnentenkarte (226) ist elektronisch an die erste Leiterplatte (211) anschließbar, so dass die Datensignal-Übertragung der Abonnentenkarte zwischen der Abonnentenkarte (300) und der ersten Leiterplatte (211) durch Verwenden des Datensignalstifts der Abonnentenkarte (226) umgesetzt ist, wenn die Abonnentenkarte (300) im Montageabschnitt (225) montiert ist, **dadurch gekennzeichnet, dass** der Montageabschnitt der Abonnentenkarte (225) ein Schlitz (225) ist, wobei der Schlitz (225) vom Boden des Substrats (221) einwärts konkav gebildet ist und derart konfiguriert ist, dass ein Datensignalstift der Abonnentenkarte (300) elektronisch an den Datensignalstift der Abonnentenkarte (226) im Schlitz (225) angeschlossen ist, wenn die Abonnentenkarte (300) im Schlitz (225) montiert ist.

2. USB-Anschluss (22) nach Anspruch 1, wobei der Datensignalstift der Abonnentenkarte (226) eine leitende Feder ist und wenn die Abonnentenkarte (300) im Schlitz montiert ist, drückt die leitende Feder gegen den Datensignalstift der Abonnentenkarte (300), um die Abonnentenkarte (300) elektronisch anzuschließen.

3. USB-Anschluss (22) nach irgendeinem der Ansprüche 1 oder 2, wobei der USB-Anschluss (22) weiterhin ein erstes Gehäuse (23) umfasst und das erste Gehäuse (23) den Boden und zwei Seiten des Substrats abdeckt, um die Positionierung der Abonnentenkarte (300) zu unterstützen, wenn die Abonnentenkarte (300) im Montageabschnitt der Abonnentenkarte (225) montiert ist.

4. USB-Anschluss (22) nach Anspruch 3, wobei das erste Gehäuse (23) mit einer Lücke (234) bereitgestellt ist; wenn die Abonnentenkarte (300) im Montageabschnitt der Abonnentenkarte (225) montiert ist, entspricht ein Teil der Abonnentenkarte (300) der Lücke (234); und die Abonnentenkarte (300) ist aus dem Montageabschnitt der Abonnentenkarte (225) durch Ziehen des Teils der Abonnentenkarte (300) herausgezogen, die der Lücke (234) entspricht.

5. USB-Anschluss (22) nach Anspruch 3 oder 4, wobei das erste Gehäuse (23) weiterhin mit einem Antriebs-Port (236) bereitgestellt ist; wenn die Abonnentenkarte (300) im Montageabschnitt der Abonnentenkarte (225) montiert ist, entspricht ein Teil der Abonnentenkarte (300) dem Antriebs-Port (236); und der Antriebs-Port (236) treibt den Teil der Abonnentenkarte (300), der dem Antriebs-Port (236) entspricht, um die Abonnentenkarte (300) vom Montageabschnitt der Abonnentenkarte (225) zu lösen.

6. USB-Anschluss (22) nach irgendeinem der Ansprüche 1 bis 5, wobei der USB-Anschluss (22) weiterhin ein zweites Gehäuse (24) umfasst und das zweite Gehäuse (24) die Oberseite des Substrats (211) abdeckt, um einen Aufnahmebereich zu bilden, der durch die Oberseite des Substrats (221) und das zweite Gehäuse (24) eingeschlossen ist.

7. USB-Anschluss (22) nach irgendeinem der Ansprüche 1 bis 6, wobei der USB-Signalstift (223) sich aus einer Fuge des USB-Anschlusses (22) erstreckt, um einen USB-Signal-Schweißstift zu bilden, um die erste Leiterplatte (221) anzuschließen; der Datensignalstift der Abonnentenkarte (226) erstreckt sich aus der Fuge des USB-Anschlusses (22), um einen Datensignal-Schweißstift der Abonnentenkarte zu bilden, um die erste Leiterplatte 8221) anzuschließen; und der USB-Signal-Schweißstift und der Datensignal-Schweißstift der Abonnentenkarte sind in einer und derselben horizontalen Ebene angeordnet oder in zwei Reihen angeordnet.

8. Drahtlose Netzwerk-Zugangsvorrichtung, umfassend einen Körperabschnitt (21) und einen USB-Anschluss (12) nach irgendeinem der Ansprüche 1 bis 7, wobei der USB-Anschluss (12) an einem Ende des Körperabschnitts (21) angeordnet ist.

## Revendications

1. Connecteur USB (22), configuré pour se connecter à une première plaquette de circuit (211) d'une partie corps (21) d'un dispositif électronique pour transmettre des signaux à la première plaquette de circuit (211), le connecteur USB (22) comprenant un substrat (221), une broche de signal USB (223), une partie de montage de carte abonné (225) et une broche de signal de données de carte abonné (226) ; la broche de signal USB (223) étant placée sur un dessus du substrat et la broche de signal USB (223) étant connectable électroniquement à la première plaquette de circuit (211) pour transmettre des signaux USB ; la partie de montage de carte abonné (225) étant placée sur un dessous du substrat (221) pour permettre le montage d'une carte abonné (300) ; la broche de signal de données de carte abonné (226) étant placée dans la partie de montage de carte abonné (225) et la broche de signal de données de carte abonné (226) étant connectable électroniquement à la première plaquette de circuit (211), de sorte que, lorsque la carte abonné (300) est montée dans la partie de montage (225), une transmission de signal de données de carte abonné entre la carte abonné (300) et la première plaquette de circuit (211) s'effectue au moyen de la broche de signal de données de carte abonné (226), **caractérisé en ce que**
la partie de montage de carte abonné (225) consiste en une rainure (225), la rainure (225) prenant une forme concave vers l'intérieur depuis le dessous du substrat (221) et étant configurée de sorte que, lorsque la carte abonné (300) est montée dans la rainure (225), une broche de signal de données de la carte abonné (300) est connectée électroniquement à la broche de signal de données de carte abonné (226) dans la rainure (225).

2. Connecteur USB (22) selon la revendication 1, dans lequel la broche de signal de données de carte abonné (226) est un ressort conducteur et, lorsque la carte abonné (300) est montée dans la rainure, le ressort conducteur exerce une pression sur la broche de signal de données de la carte abonné (300) pour se connecter électroniquement à la carte abonné (300).

3. Connecteur USB (22) selon l'une quelconque des revendications 1 à 2, le connecteur USB (22) comprenant en outre une première coque (23) et la première coque (23) couvrant le dessous et deux côtés du substrat dans le but de faciliter le positionnement de la carte abonné (300) lorsque la carte abonné (300) est montée dans la partie de montage de carte abonné (225).

4. Connecteur USB (22) selon la revendication 3, dans lequel la première coque (23) est pourvue d'une ouverture (234) ; lorsque la carte abonné (300) est montée dans la partie de montage de carte abonné (225), une partie de la carte abonné (300) correspond à l'ouverture (234) ; et la carte abonné (300) est retirée de la partie de montage de carte abonné (225) en tirant sur la partie de la carte abonné (300) qui correspond à l'ouverture (234).

5. Connecteur USB (22) selon la revendication 3 ou 4, dans lequel la première coque (23) est pourvue en outre d'un orifice d'entraînement (236) ; lorsque la carte abonné (300) est montée dans la partie de montage de carte abonné (225), une partie de la carte abonné (300) correspond à l'orifice d'entraînement (236) ; et l'orifice d'entraînement (236) entraîne la partie de la carte abonné (300) qui correspond à l'orifice d'entraînement (236) pour libérer la carte abonné (300) de la partie de montage de carte abonné (225).

6. Connecteur USB (22) selon l'une quelconque des revendications 1 à 5, le connecteur USB (22) comprenant en outre une deuxième coque (24) et la deuxième coque (24) couvrant le dessus du substrat (221) pour former une zone d'accueil délimitée par le dessus du substrat (221) et la deuxième coque (24).

7. Connecteur USB (22) selon l'une quelconque des revendications 1 à 6, dans lequel la broche de signal USB (223) s'étend hors d'un joint du connecteur USB (22) pour former une broche de soudage de signal USB destinée à se connecter à la première plaquette de circuit (221) ; la broche de signal de données de carte abonné (226) s'étend hors du joint du connecteur USB (22) pour former une broche de soudage de signal de données de carte abonné destinée à se connecter à la première carte abonné 8221) ; et la broche de soudage de signal USB et la broche de soudage de signal de données de carte abonné occupent un même plan horizontal ou occupent deux rangées.

8. Dispositif d'accès à un réseau sans fil, comprenant une partie corps (21) et un connecteur USB (12) selon l'une quelconque des revendications 1 à 7, le connecteur USB (12) étant placé à une extrémité de la partie corps (21).
